# EUROPEAN PATENT SPECIFICATION

(11) **EP 2 369 133 B1**
(45) Date of publication and mention of the grant of the patent: **29.07.2015**
(21) Application number: 10157246.9
(22) Date of filing: 22.03.2010
(51) Int. Cl.: F01D 5/14, F04D 29/68

(54) **Airfoil for a turbo-machine**
Schaufelblatt für eine Turbomaschine
Aube pour turbomachine

(43) Date of publication of application: 28.09.2011
(73) Proprietor: Rolls-Royce Deutschland Ltd & Co KG, 15827 Blankenfelde-Mahlow (DE)
(72) Inventor: Dr. Janke, Erik, 12307 Berlin (DE); Dr. Huppertz, André, 10829, Berlin (DE); Himmel, Christoph, Cambridge, CB39BB (GB); Hodson, Howard, Huntingdon, PE292JA (GB)
(74) Representative: Gross, Felix

(56) References cited:
- EP-A1- 1 081 332
- EP-A1- 2 019 186
- EP-A1- 2 031 243
- WO-A2-2010/009707
- GB-A- 750 305
- US-A- 4 822 249
- ZHANG XUE FENG AND HODSON HOWARD: "Combined Effects of Surface Trips and Unsteady Wakes on the Boundary Layer Development of an Ultra-High-Lift LP Turbine Blade" JOURNAL OF TURBOMACHINERY, vol. 127, no. 3, 31 July 2005 (2005-07-31) , pages 479-488, XP002596077 DOI: http://dx.doi.org/10.1115/1.1860571

## Description

The invention relates to an airfoil arrangement for a turbo-machine and to a use of an airfoil arrangement in an axial flow type turbo-machine.

Turbo-machines comprise compressors and turbines. Those of the axial flow type are predominant in the field of power generation and jet engines. In power generation the turbo-machines are driven by gas or steam, whereas jet engines are only driven by gas. In particular airfoils for axial flow low pressure turbines of gas turbine engines are often subject to improvements.

Axial flow turbo-machines comprise alternating rows of stationary airfoils and rotating airfoils in flow series. The rows are annular arrays of airfoils. They are arranged in pairs to form stages. A reduction of cost and weight of turbo-machines is achieved by reducing the number of stages or the number of airfoils in the rows. This results in an increased aerodynamic force on the individual airfoils.

With increased aerodynamic force the danger of flow separation from the blade surface increases. Flow separation results in a separation bubble if the separated flow reattaches upstream the airfoil trailing edge due to transition from laminar to turbulent. It is referred to as an open separation if the separated flow fails to reattach upstream of the airfoil trailing edge. Separation causes loss of aerodynamic efficiency. This limits the aerodynamic force that can be used efficiently.

The flow in turbo-machines is mainly unsteady. Wakes are shed by upstream airfoil rows. They are of particular importance because the wakes interact with a downstream airfoil and this can eliminate or reduce the size of flow separations. Modern high lift airfoil design exploits the effects of wakes to reduce weight and manufacturing cost.

High lift airfoils have regions of adverse pressure gradients on the suction surface. Without the passing wakes, a large separation bubble may form in this region. The wakes periodically suppress the separation bubble resulting in a lower aerodynamic loss. However, the airfoils suffer from higher losses if the lift is increased further.

For so-called ultra-high lift airfoils, which are designed to further reduce the number of airfoils in a stage, the effects of incoming wakes are not strong enough to suppress the separation bubble on the suction surface.

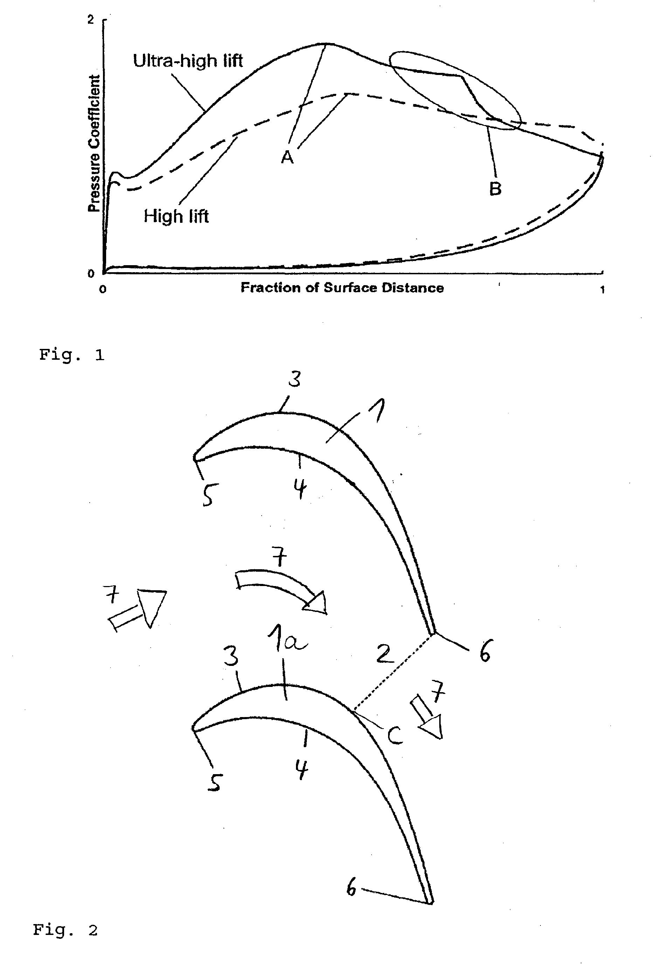

Fig. 1 shows a graph with a comparison of calculated pressure distributions of a typical high lift and a typical ultra-high lift low pressure turbine airfoil. The ordinate is given by a non-dimensional pressure coefficient with high values indicating low pressures. The abscissa is given by the suction surface distance from the leading edge of the airfoil normalized by the surface length. Downstream of the point of minimum suction side pressure A, a large separation bubble B is formed on the ultra-high lift airfoil. The same effect is observed on high lift profiles at low Reynolds numbers.

GB 750,305 describes a turbine blade with a blind recess. The recess is provided to cause the boundary layer to become turbulent at a point in chordal section of the blade which is upstream of the location at which the laminar flow separation point would occur without the presence of such a recess. However, it is difficult to determine the location of the blind recess.

US 4,822,249 discloses a turbine blade with a saw tooth spoiler edge downstream of the point of maximum velocity on the suction surface. The saw tooth spoiler edge of the turbine blade serves as a means for minimizing development of eddy formation of large separation bubbles due to transition of flow of the boundary layer from laminar to turbulent flow. A precise location is not defined.

US 7,207,772 B2 discloses a compressor blade with geometric modifications parallel to the leading edge near the tip of the compressor blade. These geometric modifications are meant to prevent oscillation of the transition point from the laminar to the turbulent when compression shocks occur. The formation of separation bubbles is not considered.

Transition-promoting configurations for steady flow operating conditions are also known from the surface roughness according to US 5,209,644. This surface roughness has been proposed in the past to reduce separation generated losses. The flow is therefore turbulent along the surface roughness but the point of separation of the boundary layer, i.e. the distance of the roughened surface from the leading edge is not defined.

A method to control the suction side boundary layer, taking into account the effects of wakes, is described in U.S. Pat. No. 6,416,289 (Ramesh et al.). A region of roughness, having its leading edge between the location of the geometric throat on the suction surface and a location at 75% of the suction surface length, is incorporated into an ultra-high lift type low pressure turbine airfoil. However, the region of roughness is located near the trailing edge. But separation bubbles can also develop further upstream.

Recent investigations have shown that there is scope for further improvement in the performance of highly loaded airfoils known in the art.

The object of the invention is to provide an improved passive flow control by geometric modifications to reduce flow separation.

This is achieved by an airfoil arrangement for a turbo-machine according to claim 1. Advantageous embodiments of the invention are included in the dependent claims.

According to the invention the problem is solved by an airfoil arrangement for a turbo-machine, wherein the airfoil arrangement comprises at least two adjacent airfoils, wherein each airfoil comprises a high lift or ultra-high lift profile with a suction surface having a point of minimum suction side pressure, a leading edge and a trailing edge, the two adjacent airfoils form a geometric throat, each airfoil is provided with at least one means for reducing separation of the boundary layer on the suction surface, wherein the means is located longitudinally along the airfoil substantially over the entire radial length of the airfoil and comprises at least one step shaped section with at least one inner edge and at least one outer edge. Each step shaped section of the airfoil has one outer edge that forms a vortex shedding edge for a controlled generation of vortices, wherein the vortex shedding edge is located between 25% of the suction surface length upstream of the geometric throat and 50% of the suction surface length downstream of the geometric throat. The step shaped section comprises at least one depression having an upstream inner edge, a downstream inner edge, an upstream outer edge and a downstream outer edge which form the steps of the step shaped section, wherein the steps drop away into the depression and wherein the downstream outer edge of each depression forms a vortex shedding edge.

One advantage of the depression type modification is that it can be directly incorporated into an existing airfoil.

This location of the means for reducing separation of the boundary layer on the suction surface of the airfoil of the present invention has the effect that additional turbulence is transported downstream and leads to earlier induced transition in the separated boundary layer and hence reduces the separation bubble length and height. Therefore, the separation bubble on the suction surface of the airfoil is smaller or completely suppressed under unsteady flow conditions. This increases the aerodynamic efficiency and decreases the fuel consumption.

Preferably, the vortex shedding edge is located at 3% of the suction surface length downstream of the point of minimum suction side pressure.

The position of the at least one vortex shedding edge can vary along the radial length of the airfoil to account for variations in the location of the reference point (point of minimum suction side pressure) along the radial length of the airfoil.

In a preferred embodiment of the invention the step shaped section drops away from the leading edge towards the trailing edge and has a step shaped transition to the trailing edge. This particular shape has the desired effect of influencing the behaviour of the boundary layer and reducing the size of the separation bubble downstream or of suppressing the separation bubble completely depending on the operating conditions.

Preferably, the depression is continuous longitudinally along the airfoil substantially over the entire radial length of the airfoil. This allows for a substantially uniform turbulent flow along the radial length of the airfoil.

Alternatively, the step shaped section of the airfoil is formed by a plurality of depressions arranged in at least one row along the radial length of the airfoil, each depression having a length parallel to the radial length of the airfoil and one downstream outer edge forming a vortex shedding edge. As a result there are alternating sections with depressions and without depressions in the suction surface of the airfoil. Because of this arrangement of the depressions the boundary flow turns into a turbulent flow and is also swirled three-dimensionally.

The inner edges and the outer edges of each depression can be sharp or rounded. Sharp edges enhance the vortex generation at the depressions. On the other hand, round edges reduce the stress concentration in the airfoil.

Preferably, each depression is substantially rectangular. This shape has the best efficiency in reducing the separation bubble and achieves minimum losses at part-load conditions.

The airfoil arrangement of the present invention is preferably used in an axial flow type turbo machine, wherein the airfoils are located in at least one stator row and/or at least one rotor row downstream of at least one row of air-foils with a smooth suction surface. The first row of airfoils does not experience the effect of wakes from a previous row of airfoils. Thus, in the first row of airfoils the step shaped section can be omitted.

The airfoil arrangement is particularly used in a compressor or a gas or steam turbine, and especially in the low pressure turbine of an axial flow type gas turbine. These types of turbo-machines predominantly suffer from separation bubbles on their airfoils at high lift or ultra-high lift conditions. Therefore, the airfoil arrangement of the present invention helps to reduce this problem and enhances the performance of these turbo-machines.

Embodiments of the invention are explained bellow by means of figures.
- Fig. 1: shows two pressure distribution graphs for a prior art high lift and an prior art ultra-high lift airfoil,
- Fig. 2: shows a sectional view of two prior art high lift turbine airfoils,
- Fig. 3: shows a side view of an airfoil with a single step in a low pressure turbine of a jet engine,
- Fig. 4: shows a side view of an airfoil with a plurality of depressions in a low pressure turbine of a jet engine according to the present invention,
- Fig. 5a: shows a cross sectional view of an airfoil with a single step,
- Fig. 5b: shows a perspective detail view of the single step,
- Fig. 6a: shows a cross sectional view of an airfoil with a plurality of depressions according to the present invention,
- Fig. 6b: shows a perspective detail view of the depressions,
- Fig. 7: shows a pressure distribution graph for a conventional high lift airfoil and an airfoil according to the invention and
- Fig. 8: shows a pressure loss graph for a conventional ultra-high lift airfoil and an airfoil according to the invention.

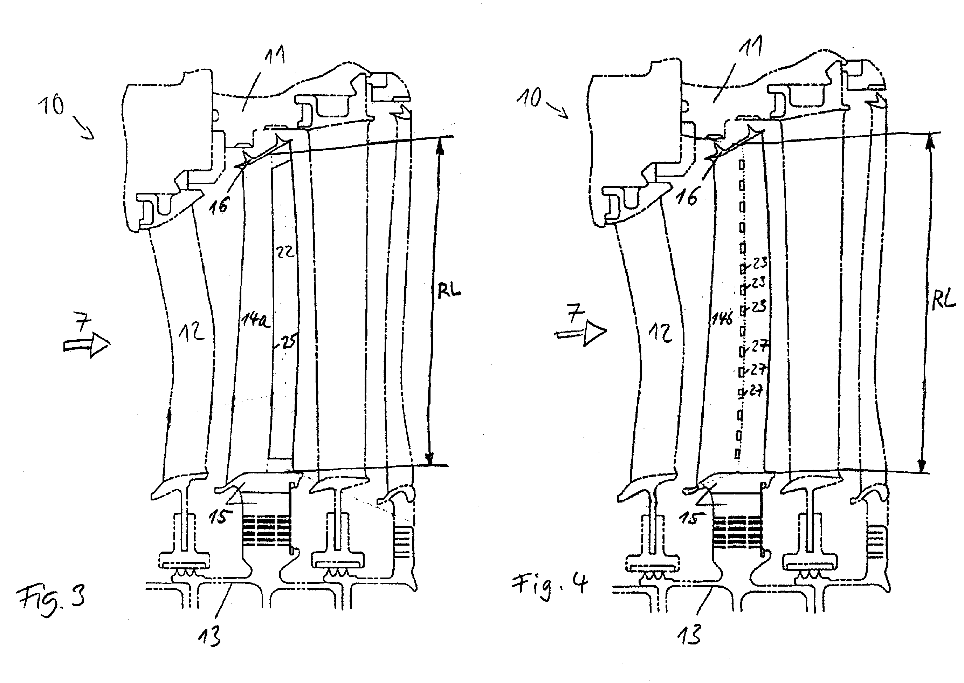

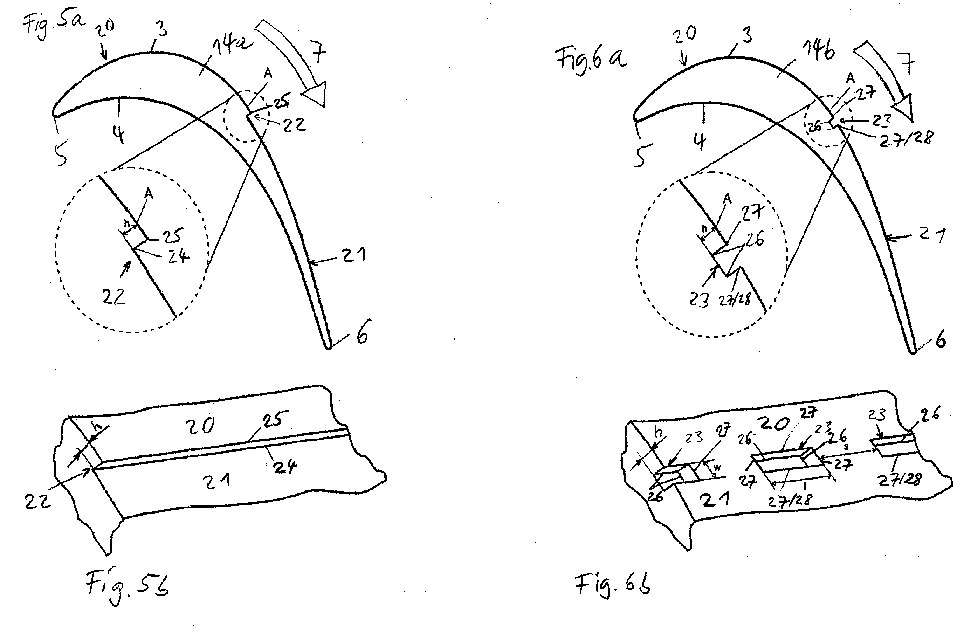

The examples shown in Figures 3, 5a and 5b do not form part of the invention but are useful for understanding the invention.

Fig. 2 shows a cross section of two uniform conventional high lift airfoils 1 and 1a in a low pressure turbine of a jet engine (not shown). Both airfoils 1 and 1a comprise a suction surface 3, a pressure surface 4, a leading edge 5 and a trailing edge 5.

The suction surface 3 of each airfoil 1, 1a is opposed to the pressure surface 4 of the respective airfoil 1, la. The suction surface 3 meets the pressure surface 4 at the leading edge 5 and the trailing edge 6.

Both airfoils 1 and 1a are arranged radially on a rotor shaft (not shown) among a plurality of airfoils (not shown). The minimum distance (dotted line) between the two airfoils 1 and 1a forms a geometric throat 2. The trailing edge 6 forms one end of the geometric throat 2. A point C is defined, where the dotted line indicating the geometric throat meets the suction surface 3 of the airfoil 1b.

A flow 7 passes between the two adjacent airfoils 1 and 1a through the geometric throat 2 and causes a rotation of the airfoils 1 on the rotor shaft.

In operation, the boundary layer on each airfoil 1, 1a among the plurality of airfoils on the rotor shaft separates from the suction side 3 of each airfoil 1, 1a and forms a separation bubble on the suction side 3. The effect of forming separation bubbles can be reduced by wakes of upstream airfoils but the performance and efficiency of the jet engine is still adversely affected.

Fig. 3 and 4 are fragmentary side views of low pressure turbines 10. The low pressure turbines 10 each comprise a stator casing 11 with a first row of airfoils 12 and a rotor shaft 13 with airfoils 14a (Fig. 3) and airfoils 14b (Fig. 4). Each airfoil in the row of airfoils 12 has a smooth surface. Each airfoil 14a, 14b has an airfoil root 15 and an airfoil end 16. The distance between the airfoil root 15 and the airfoil end 16 is the radial length RL. The radial length RL varies in the direction of the flow 7. The flow 7 passes the first row of airfoils 12 and the airfoils 14a or 14b, respectively.

Figure 3 shows one of a plurality of airfoils 14a radially arranged on the rotor shaft 13. Each airfoil 14a has a step shaped section formed by a backward facing step 22. The backward facing step 22 has a straight outer edge 25 between the airfoil root 15 and the airfoil end 16. The outer edge 25 forms the vortex shedding edge 25 for a controlled generation of turbulence. Details of the backward facing step are shown in Fig. 5a and 5b.

Figure 4 shows one of a plurality of airfoils 14b, radially arranged on the rotor shaft 13. Each airfoil 14b has a step shaped section formed by a row of depressions 23. The row of depressions 23 runs straight along the radial length RL. Each depression 23 is rectangular and has one downstream outer edge 27 that forms the vortex shedding edge 28 for a controlled generation of turbulence. Details of the depressions 23 are shown in Fig. 6a and 6b.

Both the straight backward facing step 22 of airfoil 14a in Fig. 3 and the row of depressions 23 of airfoil 14b in Fig. 4 may extend substantially over the entire radial length RL (span) of the airfoil 14a or 14b, respectively. The position of the outer edge 25 of the backward facing step and the outer edges 27 of the depressions 23 may vary over the span.

Both the straight backward facing step 22 and the row of depressions 23 may extend over the entire span of the airfoil. However, beneficial effects in regions at the airfoil root 15 and the airfoil end 16 will be limited. It is therefore preferred that the straight backward facing step 22 and the row of depressions 23 extend only over the major part of the span and are spaced apart from the airfoil root 15 and the airfoil end 16. This arrangement also reduces stress concentrations in the airfoils 14a, 14b.

Each row of airfoils 14a, 14b downstream of the first row of airfoils 12 experiences the wakes shed by the previous row or rows of airfoils in the turbine 10. Airfoils 14a, 14b are applicable to both stator and rotor airfoils subject to wakes from upstream airfoils.

The airfoils 14a, 14b are not only for application in turbines 10 but also in compressors. The turbines 10 and compressors are predominantly of the axial flow type, with at least one row of airfoils 12 upstream of the airfoils 14a, 14b.

Fig. 5a shows a cross section of an airfoil 14a with a backward facing step 22 according to Fig. 3.

The airfoil 14a comprises a suction surface 3, a pressure surface 4, a leading edge 5, a trailing edge 6 and the backward facing step 22.

The suction surface 3 and the pressure surface 4 are opposed and meet at the leading edge 5 and the trailing edge 6. The suction surface 3 has a front portion 20 and an aft portion 21. The front portion 20 and the aft portion 21 abut on the backward facing step 22. The suction surface 3 has a point of minimum suction side pressure A on the front portion 20.

The backward facing step 22 is located on the suction surface 3 of the airfoil 14a. The backward facing step 22 is formed by a depression of the aft-portion 21 of the suction surface 3 or by a raise of the front-portion 20 of the suction surface 3 or by a combination of both. The backward facing step 22 is therefore characterized by a height h between the front portion 20 and the aft portion 21 of the suction surface 3.

The backward facing step 22 has an inner edge 24 and an outer edge 25. The inner edge 24 is part of the aft portion 21 of the suction surface 3. The outer edge 25 is part of the front portion 20 of the suction surface 3. The inner edge 24 and the outer edge 25 are parallel and perpendicular to each other and spaced apart by the height h. The outer edge 25 forms the vortex shedding edge 25 for controlled induction of turbulence.

The vortex shedding edge 25 of the backward facing step 22 is located not substantially further upstream than the 25% of the suction surface length upstream the geometric throat point C (see Fig. 2). Furthermore, the vortex shedding edge 25 should not be located further downstream than the point, where the boundary layer would normally separate from the suction surface 3 for an airfoil of similar but conventional shape, i.e. the vortex shedding edge 25 should not be located further downstream than 50% of the suction surface length downstream the location of the geometric throat 2.

Preferably, the vortex shedding edge 25 is located at 3% of the suction surface length downstream of the point of minimum suction side pressure A.

Fig. 5b shows details of the backward facing step 22 of the airfoil 14a.

The backward facing step is straight along the radial length RL (see Fig. 3) of the airfoil 14a and has a sharp inner edge 24 and a sharp outer edge 25. But the backward facing step 22 may as well have different shapes, e.g. the inner edge 24 and/or the outer edge 25 can be rounded. The backward facing step 22 can be also be wavy along the radial length RL with a sharp inner edge 24 and/or outer edge 25. Alternatively, the inner edge 24 and/or outer edge 25 can be rounded. Other different shapes are also possible.

However, the shape of this feature should be simple as this can help the manufacture of the airfoil 14a. The characteristic dimensions (e.g. height h) of the backward facing step 22 are to be adapted according to the operating conditions. The backward facing step 22 has to be considered from the beginning and throughout the entire design process of an airfoil 14a.

In case of the backward facing step 22, formed between the front-portion 20 and depressed aft-portion 21 of the suction surface 3, vortices are shed from its vortex shedding edge 25. They are transported downstream and quickly break down into turbulence. The vortex shedding and breakdown is enhanced due to the passing wakes of airfoils upstream, for example from the first row of airfoils 12 in Fig. 3.

Fig. 6a shows a cross section of an airfoil 14b with a row of depressions 23 according to Fig. 4.

The airfoil 14a comprises a suction surface 3, a pressure surface 4, a leading edge 5 and a trailing edge 6 and the row of depressions 23.

The suction surface 3 and the pressure surface 4 are opposed and meet at the leading edge 5 and the trailing edge 6. The suction surface 3 has a front portion 20 and an aft portion 21. The front portion 20 and the aft portion 21 abut on the depressions 23. The suction side surface 3 has a point of minimum suction side pressure A on the front portion 20.

The depressions 23 are incorporated into the suction surface 3 of the airfoil 14b and have a height h between a plane through the inner edges 26 and a plane through the outer edges 27. The depressions 23 are rectangular and have inner edges 26 and outer edges 27. The outer edges 27 are part of the suction surface 3. The outer edge 27 that is part of the aft portion 21 of the suction surface 3 forms the vortex shedding edge 28.

The vortex shedding edge 28 of each depression 23 is located not substantially further upstream than 25% of the suction surface length upstream the geometric throat point C (see Fig. 2). The vortex shedding edge 28 of each depression 23 should not be located further downstream than the point where the boundary layer would normally separate from the suction surface 3 for an airfoil of similar but conventional shape, i.e. the vortex shedding edge 28 should not be located further downstream than 50% of the suction surface length downstream the location of the geometric throat 2.

Preferably, the vortex shedding edge 28 is located at 3% of the suction surface length downstream of the point of minimum suction side pressure A.

Fig. 6b shows details of the row of depressions 23 of the airfoil 14b.

The row of depressions 23 is straight along the radial length of the airfoil 14b (see Fig. 4). The row of depressions 23 extends along most of the radial length RL (span) of the airfoil 14b with a span-wise spacing s between the depressions 23. The depressions 23 are characterized by their span-wise length 1, their width w and their height h. The length 1 is parallel to the radial length (RL) and is greater than the width w. The characteristic dimensions of the depressions 23 are adapted to the operating conditions.

The depressions 23 may also have different shapes. Instead of a row of the depressions 23 one single straight depression can be made. The single depression or the row of depressions 23 can have sharp or round inner edges 26 and/or outer edges 27. However, the shape of the depressions 23 is not limited to these examples. The depressions 23 can be manufactured directly into an existing airfoil.

For the depressions 23 incorporated into the suction surface 3, the flow rolls up in the depressions 23. This again leads to vortex shedding and breakdown into turbulence. The effect is three-dimensional. This mechanism is enhanced due to the passing wakes of upstream airfoils, e.g. the first row of airfoils 12 in Fig. 4.

For the backward facing step 22 (Fig. 5a, 5b) and the row of depressions 23 (6a, 6b) the additional turbulence transported downstream leads to an earlier induced transition from a laminar flow to a turbulent flow in the separated boundary layer and hence to a reduction in the separation bubble height and length. This effect is particularly effective in connection with the passing wakes shed by previous blade rows.

The backward facing step 22 and the row of depressions 23 can be incorporated in both ultra-high lift airfoils and high lift airfoils.

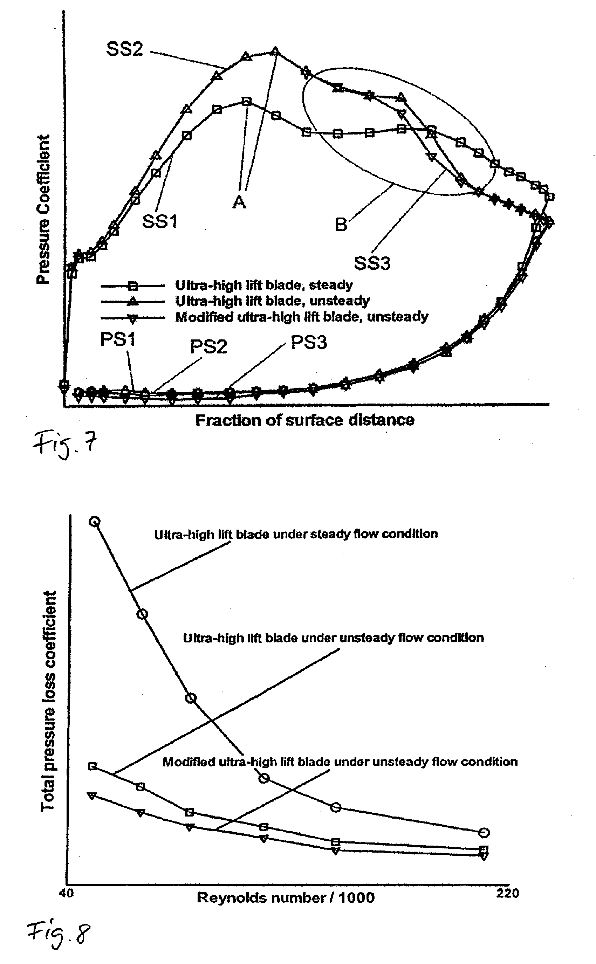

Fig. 7 is a graph showing a comparison of measured pressure coefficient distributions for a conventional ultra-high lift airfoil 1, 1b (Fig. 2) under steady and unsteady flow conditions and for an inventive (modified) ultra-high lift airfoil 14b (Fig. 4, 6a, 6b) under unsteady flow conditions.

Two pressure coefficient distribution curves show an example of the effects of wakes on the pressure distribution of a conventional ultra-high lift airfoil 1, 1b in a low pressure turbine 10 for low Reynolds number operating conditions. The pressure coefficient distribution curves are marked by squares for steady flow conditions and by upright triangles for unsteady flow conditions.

In steady flow conditions, that is flow conditions without incoming wakes, the boundary layer on the suction surface 3 separates downstream the point of minimum suction side pressure A and fails to reattach before the trailing edge 6 of the conventional ultra-high lift airfoil 1, 1b. The failure to reattach is associated with higher values of the pressure coefficient at the trailing edge 6 and a collapse of the pressure coefficient distribution on the suction surface SS1.

Under unsteady flow conditions, that is flow conditions with incoming wakes from upstream airfoils, the collapse of the peak pressure coefficient distribution SS2 is avoided. A closed separation bubble B forms at the suction surface SS2 downstream point A.

The inventive (modified) ultra-high lift airfoil 14b has a very similar pressure coefficient distribution SS3 (marked by upside-down triangles) on the suction surface outside the region of the separation bubble B compared to the pressure coefficient distribution SS2 for a conventional airfoil 1, 1b. However, under unsteady flow conditions the effects of the separation bubble B are smaller or completely suppressed with a modified ultra-high lift airfoil 14b.

The pressure coefficient distribution of a conventional airfoil 1, 1b are shown by curves PS1 (marked by squares) for steady flow conditions and PS2 (marked by upright triangles) for unsteady conditions. The depressions 23 of the modified ultra high-lift airfoil 14b do not substantially affect the pressure coefficient distribution PS3 (marked by upside-down triangles) on the pressure surface 4 even though changes are possible.

Fig. 8 is a graph showing a comparison of measured profile losses indicated by the total pressure loss coefficient for a conventional ultra-high lift airfoil 1, 1b (Fig. 2) under steady and unsteady flow conditions and for an inventive (modified) airfoil 14b (Fig. 4, 6a, 6b) under unsteady flow conditions.

The total pressure loss coefficient curves are marked by circles for a conventional ultra-high lift airfoil 1, 1b in a low pressure turbine 10 under steady flow conditions, by squares for unsteady flow conditions and by upside-down triangles for a modified ultra-high lift airfoil 14b at different Reynolds numbers.

The profile loss is a measure for the inefficiency of the conventional airfoils 1, 1b. The profile loss is presented by the non-dimensional total pressure loss coefficient. Corresponding to the reduction of the size of the separation bubble B (Fig. 7) due to the incoming wakes the generated loss is reduced. With the modified airfoil 14b, a further loss reduction is achieved. This is consistent with a further reduction of the size of the separation bubble B. The use of the modified ultra-high lift airfoil 14b is particularly effective at low Reynolds numbers. With increasing Reynolds number the loss reduction decreases and may even turn from a beneficial effect to a detrimental effect at higher Reynolds numbers. The recommended Reynolds number range for application of the invention is between 10000 and 250000, where the Reynolds number is based on the airfoil chord and the velocity at the exit of the airfoil row.

Depending on the operating conditions and in particular on the Reynolds number, the optimal characteristic dimensions of the depressions 23 of airfoil 14b may vary. However, the recommended compromise values in percent of the suction surface length are 0.10 for the height h of the depressions 23 and 2.0 for the width w of the depressions 23. The spacing s of the depressions 23 should not exceed 5 percent of the airfoil span, with a recommended depression length l to depression spacing s ratio of 3.

Reference List
- 1: Airfoil
- 1a: Airfoil
- 2: Geometric throat
- 3: Suction surface
- 4: Pressure surface
- 5: Leading edge
- 6: Trailing edge
- 7: Flow
- C: Point of location of geometric throat

- 10: Low pressure turbine
- 11: Stator casing
- 12: First row of airfoils
- 13: Rotor shaft
- 14a: Airfoil
- 14b: Airfoil
- 15: Airfoil root
- 16: Airfoil end
- RL: Radial length

- 20: Front portion
- 21: Aft portion
- 22: Backward facing step
- 23: Depression
- 24: Inner edge
- 25: Outer edge / Vortex shedding edge
- 26: Inner edge
- 27: Outer edge
- 28: Vortex shedding edge
- h: Height
- 1: Length

- w: Width
- s: Spacing

- A: Point of minimum suction side pressure
- B: Separation bubble

- SS1: Pressure coefficient distribution on the suction surface
- SS2: Peak pressure coefficient distribution on the suction surface
- SS3: Pressure coefficient distribution on the suction surface

- PS1: Pressure coefficient distribution on the pressure surface
- PS2: Pressure coefficient distribution on the pressure surface
- PS3: Pressure coefficient distribution on the pressure surface

## Claims

1. Airfoil arrangement for a turbo-machine comprising at least two adjacent airfoils, wherein each airfoil comprises a high lift or ultra-high lift profile with a suction surface (3) having a point of minimum suction side pressure (A), a leading edge (5) and a trailing edge (6), the two adjacent airfoils form a geometric throat (2), each airfoil is provided with at least one means for reducing separation of the boundary layer on the suction surface (3), wherein the means is located longitudinally along the airfoil substantially over the entire radial length (RL) of the airfoil and comprises at least one step shaped section with at least one inner edge (26) and at least one outer edge (27), wherein each step shaped section of the airfoil (14b) has one outer edge (27) that forms a vortex shedding edge (28) for a controlled generation of vortices, wherein the vortex shedding edge (28) is located between 25% of the suction surface length upstream of the geometric throat (2) and 50% of the suction surface length downstream of the geometric throat (2),
**characterized in that**
the step shaped section comprises at least one depression (23) having an upstream inner edge (26), a downstream inner edge (26), an upstream outer edge (27) and a downstream outer edge (27) which form the steps of the step shaped section, wherein the steps drop away into the depression (23) and wherein the downstream outer edge (27) of each depression forms a vortex shedding edge (28).

2. Airfoil arrangement according to claim 1, **characterized in that** the vortex shedding edge (28) is located at 3% of the suction surface length downstream of the point of minimum suction side pressure (A).

3. Airfoil arrangement according to claim 1 or 2, **characterized in that** the position of the at least one vortex shedding edge (28) varies along the radial length of the airfoil (14b).

4. Airfoil arrangement according to claim 3, **characterized in that** the step shaped section drops away from the leading edge (5) towards the trailing edge (6) and has a step shaped transition to the trailing edge (6).

5. Airfoil arrangement according to any of claims 1 to 4, **characterized in that** the depression is continuous longitudinally along the airfoil substantially over the entire radial length of the airfoil.

6. Airfoil arrangement according to any of claims 1 to 4, **characterized in that** the step shaped section of the airfoil (14b) is formed by a plurality of depressions (23) arranged in at least one row along the radial length (RL) of the airfoil (14b), each depression (23) having a length (1) parallel to the radial length (RL) of the airfoil (14b) and one downstream outer edge (27) forming a vortex shedding edge (28).

7. Airfoil arrangement according to any of claims 1 to 6, **characterized in that** the inner edges (26) and the outer edges (27) of each depression (23) are sharp or rounded.

8. Airfoil arrangement according to any of claims 1 to 7, **characterized in that** each depression (23) is substantially rectangular.

9. Airfoil arrangement according to any of claims 1 to 8, **characterized in that** the outer edges (27) are part of the suction surface (3).

10. Use of an airfoil arrangement according to any one of the claims 1 to 9 in an axial flow type turbo machine, wherein the airfoils are located in at least one stator row and/or at least one rotor row downstream of at least one row of airfoils (12) with a smooth suction surface.

11. Use of an airfoil arrangement according to claim 10 in a compressor.

12. Use of an airfoil arrangement according to claim 10 in a gas or steam turbine.

13. Use of an airfoil arrangement according to claim 12 in the low pressure turbine (10) of an axial flow gas turbine.

## Patentansprüche

1. Schaufelblatt-Anordnung für eine Turbomaschine, mindestens zwei benachbarte Schaufelblätter umfassend, wobei jedes Schaufelblatt ein Hochauftriebs- oder Ultrahochauftriebsprofil mit einer Saugfläche (3), welche einen Punkt des minimalen saugseitigen Drucks (A) aufweist, eine Leitkante (5) und eine Hinterkante (6) umfasst, die zwei benachbarten Schaufelblätter eine geometrische Ventilkehle (2) bilden, jedes Schaufelblatt mit mindestens einem Mittel zur Reduktion der Separation der Grenzschicht auf der Saugfläche (3) ausgestattet ist, wobei das Mittel in Längsrichtung entlang des Schaufelblatts im Wesentlichen über die gesamte radiale Länge (RL) des Schaufelblatts angeordnet ist und mindestens einen stufenförmigen Abschnitt mit mindestens einer Innenkante (26) und mindestens einer Außenkante (27) umfasst, wobei jeder stufenförmige Abschnitt des Schaufelblatts (14b) eine Außenkante (27) aufweist, die eine Wirbelablösungs-Kante (28) für eine kontrollierte Erzeugung von Wirbeln aufweist, wobei sich die Wirbelablösungskante (28) zwischen 25% der Saugflächenlänge stromaufwärts der geometrischen Ventilkehle (2) und 50% der Saugflächenlänge stromabwärts der geometrischen Ventilkehle (2) befindet,
**dadurch gekennzeichnet, dass**
der stufenförmige Abschnitt mindestens eine Vertiefung (23) umfasst, die eine stromaufwärts gelegene Innenkante (26), eine stromabwärts gelegene Innenkante (26), eine stromaufwärts gelegene Außenkante (27) sowie eine stromabwärts gelegene Außenkante (27) aufweist, welche die Stufen des stufenförmigen Abschnitts bilden, wobei die Stufen in die Vertiefung (23) hinein abfallen und wobei die stromabwärts gelegene Außenkante (27) jeder Vertiefung eine Wirbelablösungskante (28) bildet.

2. Schaufelblatt-Anordnung gemäß Anspruch 1, **dadurch gekennzeichnet, dass** sich die Wirbelablösungskante (28) bei 3% der Saugflächenlänge stromabwärts von dem Punkt des minimalen saugseitigen Drucks (A) befindet.

3. Schaufelblatt-Anordnung gemäß Anspruch 1 oder 2, **dadurch gekennzeichnet, dass** die Position der mindestens einen Wirbelablösungskante (28) entlang der radialen Länge des Schaufelblatts (14b) variiert.

4. Schaufelblatt-Anordnung gemäß Anspruch 3, **dadurch gekennzeichnet, dass** der stufenförmige Abschnitt von der Leitkante (5) zu der Hinterkante (6) hin abfällt und einen stufenförmigen Übergang zu der Hinterkante (6) aufweist.

5. Schaufelblatt-Anordnung gemäß einem beliebigen der Ansprüche 1 bis 4, **dadurch gekennzeichnet, dass** die Vertiefung in Längsrichtung entlang des Schaufelblatts im Wesentlichen durchgängig über die gesamte radiale Länge des Schaufelblatts verläuft.

6. Schaufelblatt-Anordnung gemäß einem beliebigen der Ansprüche 1 bis 4, **dadurch gekennzeichnet, dass** der stufenförmige Abschnitt des Schaufelblatts (14b) durch eine Vielzahl von Vertiefungen (23) gebildet wird, die in mindestens einer Reihe entlang der radialen Länge (RL) des Schaufelblatts (14b) angeordnet sind, wobei jede Vertiefung (23) eine Länge (1) parallel zu der radialen Länge (RL) des Schaufelblatts (14b) und eine stromabwärts gelegene Außenkante (27), die eine Wirbelablösungskante (28) bildet, aufweist.

7. Schaufelblatt-Anordnung gemäß einem beliebigen der Ansprüche 1 bis 6, **dadurch gekennzeichnet, dass** die Innenkanten (26) und die Außenkanten (27) jeder Vertiefung (23) scharf oder abgerundet sind.

8. Schaufelblatt-Anordnung gemäß einem beliebigen der Ansprüche 1 bis 7, **dadurch gekennzeichnet, dass** jede Vertiefung (23) im Wesentlichen rechteckig ist.

9. Schaufelblatt-Anordnung gemäß einem beliebigen der Ansprüche 1 bis 8, **dadurch gekennzeichnet, dass** die Außenkanten (27) einen Teil der Saugfläche (3) darstellen.

10. Verwendung einer Schaufelblatt-Anordnung gemäß einen beliebigen der Ansprüche 1 bis 9 in einer Axialströmungs-Turbomaschine, wobei die Schaufelblätter sich in mindestens einer Statorreihe und/oder mindestens einer Rotorreihe stromabwärts von mindestens einer Reihe von Schaufelblättern (12) mit einer glatten Saugfläche befinden.

11. Verwendung einer Schaufelblatt-Anordnung gemäß Anspruch 10 in einem Kompressor.

12. Verwendung einer Schaufelblatt-Anordnung gemäß Anspruch 10 in einer Gas- oder Dampfturbine.

13. Verwendung einer Schaufelblatt-Anordnung gemäß Anspruch 12 in der Niederdruckturbine (10) einer Axialströmungs-Gasturbine.

## Revendications

1. Assemblage d'aube pour une turbomachine comprenant au moins deux aubes adjacentes, chaque aube comprenant un profil à portance élevée ou très élevée avec une surface de succion (3) qui présente un point de pression latérale à succion minimale (A), un rebord avant (5) et un rebord arrière (6), les deux aubes adjacentes formant une gorge géométrique (2), chaque aube est dotée d'au moins un moyen pour réduire la séparation de la couche limite sur la surface de succion (3), ce moyen étant situé longitudinalement le long de l'aube, essentiellement sur toute la longueur radiale (RL) de l'aube, et comprenant au moins une section en forme d'épaulement avec au moins un rebord interne (26) ainsi qu'au moins un rebord externe (27), chaque section en forme d'épaulement sur l'aube (14b) disposant d'un rebord externe (27) formant un rebord à décollement de tourbillon (28) afin de permettre une génération contrôlée des tourbillons, le rebord à décollement de tourbillon (28) étant situé entre 25 % de la longueur de la surface de succion en amont de la gorge géométrique (2) et 50 % de la surface de succion en aval de la gorge géométrique (2),
**caractérisé en ce que**
la section en forme d'épaulement comprend au moins une dépression (23) avec un rebord interne en amont (26), un rebord interne en aval (26), un rebord externe en amont (27) et un rebord externe en aval (27) formant l'épaulement de la section en forme d'épaulement, les épaulements tombant dans la dépression (23) et le rebord externe en aval (27) de chaque dépression formant un rebord de décollement de tourbillon (28).

2. Assemblage d'aube selon la revendication 1, **caractérisé en ce que** le rebord à décollement de tourbillon (28) est situé à environ 3 % de la longueur de la surface de succion, en aval du point de pression latérale à succion minimale (A).

3. Assemblage d'aube selon les revendications 1 ou 2, **caractérisé en ce que** la position dudit au moins un rebord à décollement de tourbillon (28) varie sur la longueur radiale de l'aube (14b).

4. Assemblage d'aube selon la revendication 3, **caractérisé en ce que** la section en forme d'épaulement tombe en s'éloignant du rebord avant (5) vers le rebord arrière (6) et présente une transition en forme d'épaulement avec le rebord arrière (6).

5. Assemblage d'aube selon l'une des revendications 1 à 4, **caractérisé en ce que** la dépression est longitudinalement continue le long de l'aube et essentiellement sur toute la longueur radiale de l'aube.

6. Assemblage d'aube selon l'une des revendications 1 à 4, **caractérisé en ce que** la section en forme d'épaulement de l'aube (14b) est formée par une pluralité de dépressions (23) disposées en au moins une rangée le long de la longueur radiale (RL) de l'aube (14b), chaque dépression (23) ayant une longueur (1) parallèle à la longueur radiale (RL) de l'aube (14b) ainsi qu'un rebord externe en aval (27) formant un rebord à décollement de tourbillon (28).

7. Assemblage d'aube selon l'une des revendications 1 à 6, **caractérisé en ce que** les rebords internes (26) et les rebords externes (27) de chaque dépression (23) sont acérées ou arrondies.

8. Assemblage d'aube selon l'une des revendications 1 à 7, **caractérisé en ce que** chaque dépression (23) est essentiellement rectangulaire.

9. Assemblage d'aube selon l'une des revendications 1 à 8, **caractérisé en ce que** les rebords externes (27) font partie de la surface de succion.

10. Usage d'un assemblage d'aube selon l'une des revendications 1 à 9 dans une turbomachine à écoulement axial, les aubes étant situées dans au moins une rangée de stators ou au moins une rangée de rotors en aval d'au moins une rangée d'aube (12) avec une surface de succion lisse.

11. Usage d'un assemblage d'aube selon la revendication 10 dans un compresseur.

12. Usage d'un assemblage d'aube selon la revendication 10 dans une turbine à gaz ou à vapeur.

13. Usage d'un assemblage d'aube selon la revendication 12 dans la turbine à basse pression (10) d'une turbine à écoulement axial.
